# EUROPÄISCHE PATENTSCHRIFT

(11) **EP 1 935 720 B1**
(45) Veröffentlichungstag und Bekanntmachung des Hinweises auf die Patenterteilung: **04.08.2010**
(21) Anmeldenummer: 07150094.6
(22) Anmeldetag: 18.12.2007
(51) Int. Cl.: B60R 1/06

(54) **Spiegelhalterung für einen Fahrzeugaußenspiegel sowie Fahrzeugaußenspiegel mit einer solchen Spiegelhalterung**
Mirror holder for an automobile wing mirror and automobile wing mirror with such a mirror holder
Fixation de miroir pour un rétroviseur extérieur de véhicule tel que rétroviseur de véhicule extérieur doté d'une telle fixation de miroir

(30) Priorität: 22.12.2006 DE 202006019380 U
(43) Veröffentlichungstag der Anmeldung: 25.06.2008
(73) Patentinhaber: MEKRA Lang GmbH & Co. KG, 90765 Fürth (DE)
(72) Erfinder: Meier, Markus, 91478, Markt Nordheim (DE); Pfanz, Jürgen, 91583, Schillingfürst (DE); Popp, Albrecht, 91629, Weihenzell (DE); Deffner, Simon, 91604, Flachslanden (DE); Lang, Werner, 91465 Ergersheim (DE)
(74) Vertreter: Winter, Brandl, Fürniss, Hübner, Röss, Kaiser, Polte - Partnerschaft

(56) Entgegenhaltungen:
- EP-A- 1 531 084
- DE-A1- 10 105 695
- DE-A1- 19 729 366
- US-B1- 6 453 504

## Beschreibung

Die vorliegende Erfindung betrifft eine Spiegelhalterung für Fahrzeugaußenspiegel, insbesondere für Nutzfahrzeuge, sowie einen Fahrzeugaußenspiegel mit einer solchen Spiegelhalterung.

Fahrzeugspiegel nach dem Stand der Technik umfassen wenigstens einen Spiegelkopf, der seinerseits wenigstens eine Spiegelscheibe umfasst. Diese Spiegelscheibe kann fest oder verstellbar in einem Gehäuse angeordnet oder direkt in einem Rahmen befestigt sein. Gegebenenfalls sind im Gehäuse weiters eine Verstelleinrichtung zum motorischen Verstellen der Spiegelscheibe gegenüber dem Gehäuse, Heizelemente zum Beheizen des Spiegel oder dergleichen aufgenommen.

In einer einfachen Variante wird ein solcher Spiegelkopf an einem im wesentlichen U-förmig gebogenen metallischen Rohrbügel befestigt, der seinerseits an seinen beiden Enden an am Fahrzeug befestigten Lagerböcken befestigt wird. In der EP 0 090 909 ist beispielsweise die Verstelleinrichtung mittels Klemmung an dem Rohrbügel festgelegt. In der EP 0 590 510 ist das Gehäuse selbst mittels Klemmung an dem Rohrbügel festgelegt. Der Rohrbügel seinerseits kann an am Fahrzeug befestigten Lagerböcken angelenkt sein. Hierzu schlägt die EP 0 697 311 vor, an dem metallischen Rohrbügel Lagerbuchsen aus Kunststoff zu befestigen, die ihrerseits mit den Lagerböcken eine Rastverzahnung zur Winkelverstellung des Rohrbügels bilden.

Obwohl diese Konstruktion sehr stabil und einfach ist, weist sie eine Reihe von Nachteilen auf: zum einen ist die Spiegelscheibe (über das Gehäuse bzw. die Verstelleinrichtung) nur reibschlüssig drehfestgelegt. Zum anderen ist der Aufbau aerodynamisch unvorteilhaft, was Fahrtwiderstand und Beanspruchung durch Windkräfte nachteilig erhöht. Der aus Festigkeitsgründen komplett metallische Rohrbügel ist auch schwer. Schließlich ist mit den zusätzlichen Lagerbuchsen aus Kunststoff eine Vielzahl von Einzelteilen erforderlich, was nicht nur die Herstellung, sondern auch die Montage auf wendig und teuer macht.

Die EP 1 024 051 schlägt hierzu einen einstückigen Tragarm mit zwei Haltearmen und einem diese verbindenden Anschlussteil vor. Am Anschlussteil des vollständig aus Kunststoff gefertigten Tragarms kann die Tragplatte eines Spiegelgehäuses mittels komplementärer Befestigungsvorrichtungen fixiert werden. In gleicher Weise schlägt die EP 1 013 502 eine Rückspiegelanordnung mit einem Trägerkörper aus Kunststoff zur Aufnahme einer Spiegelscheibe vor, der einstückig mit zwei Hohlarmen ausgebildet ist.

Auch diese Konstruktion weist eine Reihe von Nachteilen auf: zum einen können Spiegelgehäuse, die für die oben beschriebenen Rohrbügelversionen konzipiert sind, nicht an dem Tragarm befestigt werden. Es müssen also stets mehrere Gehäusebaureihen bevorratet werden. Auch können Gehäuse der Rohrbügelversion bei einem "Upgrade" zu dem aerodynamisch günstigeren und leichteren Kunststofftragarm nicht weiterverwendet werden. Umgekehrt können an diesem Tragarm keine Spiegelscheiben mit Rahmen, also ohne Gehäuse, befestigt werden.

Darüber hinaus ist die Festigkeit des vollständig aus Kunststoff gefertigten Tragarms begrenzt, so dass ein daran befestigter Spiegel windinduzierten oder vom Fahrzeug übertragenen Vibrationen verstärkt ausgesetzt ist. Um die eingeschränkte Festigkeit von Spiegelhalterungen aus Kunststoff zu verbessern, schlägt die EP 1 531 084 vor, zumindest einen den Spiegelkopf tragenden Steg als Metallrohr auszubilden.

Zur Befestigung des Spiegelkopfes an dem Spiegelkopfhaltearm ist auch bei der Spiegelhalterung nach der EP 1 531 084 eine entsprechend konfigurierte Befestigung nötig, so dass es nicht, wie beispielsweise bei der oben beschriebenen Rohrbügelversion durch einfaches Verdrehen möglich ist, die selben.Tragarme für rechts- und linksgesteuerte Fahrzeuge zu verwenden. Während der in Fahrtrichtung linke (rechte) Außenspiegel bei linksgesteuerten Fahrzeugen der Fahrerspiegel (Beifahrerspiegel) ist und daher weniger (mehr) um die Hochachse des Fahrzeugs verdreht ist, ist dies bei rechtsgesteuerten Fahrzeugen gerade umgekehrt. Daher müssen bislang stets vier Varianten (Fahrerspiegel/Beifahrerspiegel für rechts-/linksgesteuert) bevorratet werden. Hierzu schlägt das DE 295 04 245 vor, zwischen Spiegelfuß und Spiegelgehäuse nachträglich ein zusätzliches Adapterteil zu montieren, das das Gehäuse gegenüber dem Fuß in unterschiedlichen Winkeln fixiert. Dazu ist jedoch ein zusätzliches Teil notwendig, was nicht nur Gewicht, Fertigungs- und Montageaufwand erhöht, sondern zusätzliche Vibrationsquellen einführt.

Aufgrund von Design-Anforderungen können die Spiegelhalterungen nicht mehr als einfache Rohrbügel ausgebildet werden, sondern weisen eine Form auf, wie dies aus der bereits genannten EP 1 531 084 bekannt ist. Bei den hieraus bekannten Spiegelhalterungen ist der Spiegelkopfhaltearm als Metallrohr ausgebildet. Damit der Spiegelkopf mit den Spiegeln in der richtigen Lage und Winkelstellung montiert wird, müssen in entsprechender Position und Lage Befestigungsmittel oder zumindest Markierungen an diesen Metallrohren vorgesehen werden, d. h. für jede Außenspiegelvariante und für den linken und rechten Außenspiegel müssen unterschiedliche Metallrohre hergestellt und bevorratet werden. Die reinen Herstellungskosten von verschieden Metallrohren im Gegensatz zu einer Variante sind zwar nicht höher, jedoch ist der Lagerungs- und Logistikaufwand höher. Alternativ wird der Spiegelkopf in immer der gleichen Weise mit dem Spiegelkopftragarm verbunden und die unterschiedlichen Winkelstellungen werden durch unterschiedliche Befestigung des Spiegelkopftragarms an dem oberen und unteren Haltearm erzielt. Dies führt zu einem erheblichen Montageaufwand und der Gefahr einer falschen oder fehlerhaften Montage.

Aus der US 6,453,504ist ein Rückspiegel mit einer Wischervorrichtung für das Spiegelglas bekannt, wobei ein Wischer entlang eines Führungsprofils auf- und abbeweglich ist. Das Spiegelgehäuse kann als Strangpressprofil ausgebildet sein, wobei dann die beiden offenen Enden des Profils mit Verschlusskappen versehen werden, von denen Befestigungszapfen vorstehen, welche wiederum mit Haltearmen verbindbar sind, welche am Fahrzeug befestigt sind.

Aus der DE 197 29 366, von der die vorliegende Erfindung ausgeht, ist ein Rückspiegel bekannt, bei dem durch ein Strangpressprofil einstückig sowohl eine Tragstruktur als auch ein Teil des Spiegelkopfs gebildet werden. Die Tragstruktur erstreckt sich durch den Spiegelkopf und dient auch zur Festlegung eines Verstellantriebs für die Spiegelscheibe. Das gesamte Strangpressprofil wird jeweils endseitig von Abschlusskappen verschlossen, an denen die Haltearme angelenkt sind.

Sowohl bei der US 6,453,504 als auch der DE 197 29 366 ergibt sich wieder das Problem, dass die Spiegelscheibe (über das Gehäuse bzw. die Verstelleinrichtung) nur reibschlüssig an den Haltearmen drehfestgelegt ist. Auch ist hier wieder der Aufbau aerodynamisch unvorteilhaft, was Fahrtwiderstand und Beanspruchung durch Windkräfte bzw. Vibrationsanfälligkeit nachteilig erhöht.

Es ist demgegenüber eine Aufgabe der vorliegenden Erfindung, eine Spiegelhalterung für einen Fahrzeugaußenspiegel zu schaffen, die eine einfache und stabile Montage von Spiegelköpfen in unterschiedlichen Winkelstellungen gewährleistet. Weiter ist es Aufgabe der vorliegenden Erfindung einen linken oder rechten Fahrzeugaußenspiegel mit einer solchen Spiegelhalterung anzugeben.

Die Lösung dieser Aufgabe erfolgt durch die Merkmale des Anspruchs 1 bzw. 12.

Durch die Verwendung eines Strangpressprofils in einer Rückspiegelkonstruktion, wie dies an sich aus der US 6,453,504 oder der der DE 197 29 366 bekannt ist, wobei dieses Strangpressprofil das einfache Metallrohr ersetzt, wie es aus der EP 1 531 084 bekannt ist, wird es zunächst möglich, die Markierungen für die Montage eines Spiegelkopfes in einem Arbeitsgang mit der Herstellung des Spiegelkopfarmes bereitzustellen. Ein zusätzlicher Arbeitsgang ist nicht notwendig. Das Strangpressprofil wird immer in gleicher Weise an dem oberen und dem unteren Haltearm befestigt. Damit kann die äußere Form bzw. die Querschnittsform des Strangpressprofils die Montagelage und damit die Winkelstellung eines daran befestigten Spiegelkopfes festlegen. Weiterhin weist erfindungsgemäß das Strangpressprofil wenigstens eine erste Längsnut auf, mittels der das Strangpressprofil bezüglich dem oberen und dem unteren Haltearm drehgesichert ist, so dass das notwendige Drehmoment von dem Strangpressprofil und einem daran montierten Spiegelkopf auf die Haltearme übertragen wird. Im gleichen Zug wird über diese Längsnut die Winkellage oder -stellung des Strangpressprofils zu den Haltearmen festgelegt.

Zur Vergrößerung des übertragbaren Drehmoments werden vorteilhaft zwei oder mehr Längsnuten im Strangpressprofil vorgesehen. Dadurch, dass diese Längsnuten nicht symmetrisch zueinander liegen, wird erreicht, dass der Spiegelkopf nicht verdreht montiert werden kann. Längsnuten können auf einfache Weise in einem Strangpressprofil hergestellt werden - Anspruch 2.

Vorzugsweise ist in wenigstens einer Längsnut eine Mehrzahl von Längsrillen eingebracht, die aufgrund ihrer Teilung eine exakte Wnkelposition des Spiegelkopfes festlegen und augrund ihrer Mehrzahl unterschiedliche Winkelstellungen des Spiegelkopfes an dem Strangpressprofil bzw. den Spiegelkopfhaltearm exakt festlegen - Ansprüche 3 und 4.

Vorzugsweise wird ein Hohlprofil als Strangpressprofil eingesetzt, wodurch die Festigkeit und Stabilität erhöht wird - Anspruch 5.

Durch die Ausbildung des Strangpressprofils aus Metall wird eine ausreichende Stabilität bei gleichzeitig geringem Gewicht gewährleistet. Insbesondere wird eine Aluminium-Strangpressprofil eingesetzt, da es ein geringes Gewicht und hohe Festigkeit gewährleistet. Darüber hinaus erübrigt sich der sonst bei Stahlrohren notwendige Korrosionsschutz - Anspruch 6.

Durch die symmetrische Ausgestaltung der Spiegelhalterung nach Anspruch 7 verringert sich die Anzahl der unterschiedlichen Komponenten für linke und Rechte Fahrzeugaußenspiegel. Ausgehend von den Befestigungselementen für den oberen und untern Haltearm sind die Drehpunkte am Fahrzeug am oberen und unteren Befestigungselement so festzulegen, dass ein gleicher Abstand und gleicher Winkel zwischen dem oberen und dem unteren Haltearm zum Spiegelkopf erzielt wird. Zusätzlich wird der Spiegelkopf so an dem Spiegelkopfhaltearm befestigt, dass zwischen der oberen Befestigung und der unteren Befestigung gleiche Verhältnisse vorliegen, d.h. dass eine symmetrische Anordnung erzielt wird.

Die weiteren Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform anhand der Zeichnung.

Es zeigt:
- Fig. 1: eine Ansicht einer beispielhaften Ausführungsform der Erfindung als linke Spiegelhalterung entgegen der Fahrtrichtung betrachtet bzw. bei Drehung um 180° die rechte Spiegelhalterung entgegen der Fahrtrich- tung betrachtet;
- Fig. 2: eine Ansicht der Spiegelhalterung nach Fig. 1 schräg von oben bzw. unten;
- Fig. 3: einen beispielhaften linken Fahrzeugaußenspiegel entgegen der Fahrtrichtung betrachtet mit einer Spiegelhalterung nach Fig. 1 und 2;
- Fig. 4: den linken Fahrzeugaußenspiegel nach Fig. 3 mit abgenommener Spiegelkopfabdeckung;
- Fig. 5a und 5b: Schnitte entlang der Linien A-A bzw. B-B in Fig. 4; und
- Fig. 6: eine Detaildarstellung des Spiegelkopfhaltearms mit Längsnut und Ril- len zur Festlegung unterschiedlicher Winkelstellungen des Spiegel- kopfes.

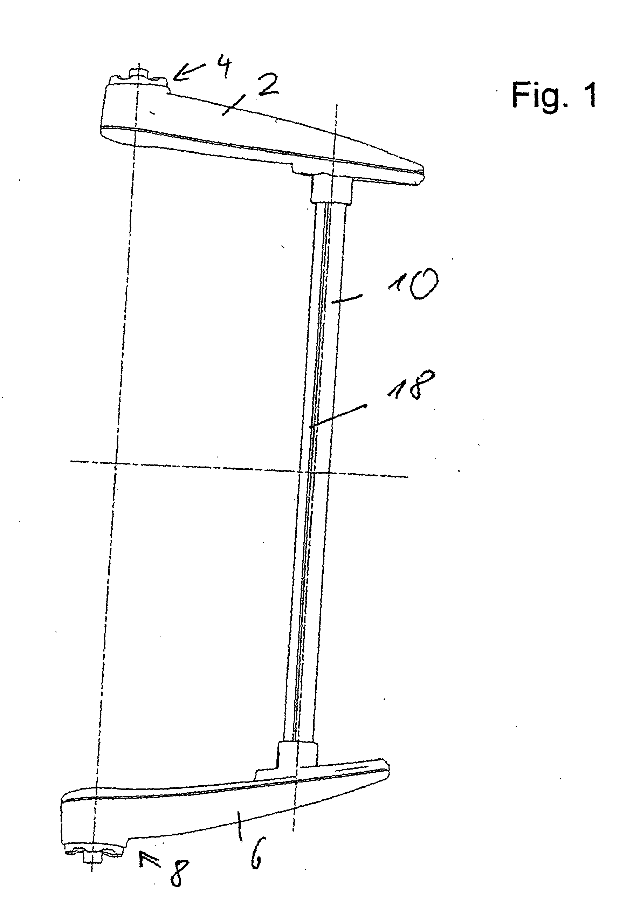

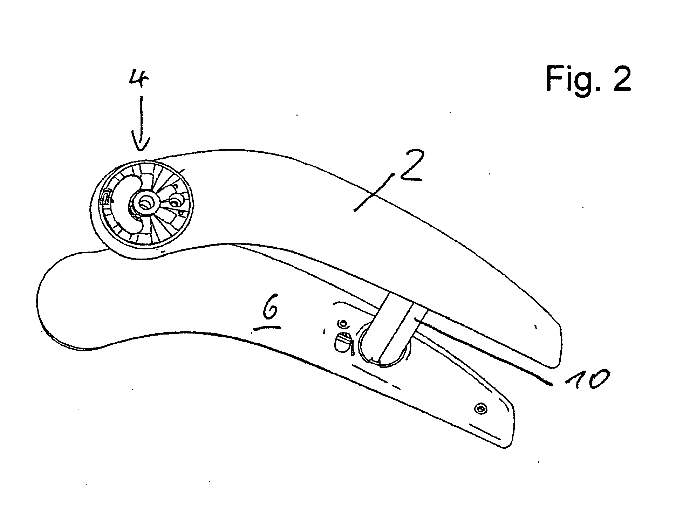

Die in Fig. 1 und 2 dargestellte linke oder rechte Spiegelhalterung umfasst einen oberen Haltearm 2. Der obere Haltearm 2 weist an seinem fahrzeugseitigen Ende ein oberes Befestigungselement 4 zur Befestigung an einem nicht dargestellten Fahrzeug auf. Weiter umfasst die in Fig. 1 bzw. 2 dargestellte Spiegelhalterung einen unteren Haltearm 6, der an seinem fahrzeugseitigen Ende ebenfalls mit einem unteren Befestigungselement 8 zur Befestigung an dem nicht näher dargestellten Fahrzeug versehen ist. Das oberen und das untere Befestigungselement 4 bzw. sind als Rastgelenk ausgebildet, wobei in Fig. 1 bzw. 2 lediglich ein Teil des Rastgelenks dargestellt ist.

Der obere Haltearm 2 und der untere Haltearm 6 sind über einen geraden Spiegelkopfhaltearm 10 fest miteinander verbunden, der als Hohlprofil ausgebildet ist. Der Spiegelkopfhaltearm 10 ist ein Aluminium-Strangpressprofil. Das Aluminium-Strangpressprofil 10 ist mit seinen beiden Stirnenden so in den oberen bzw. unteren Haltearm 2 bzw. 6 eingepresst und verschraubt, so dass die beiden Enden vollständig von Kunststoff umschlossen sind.

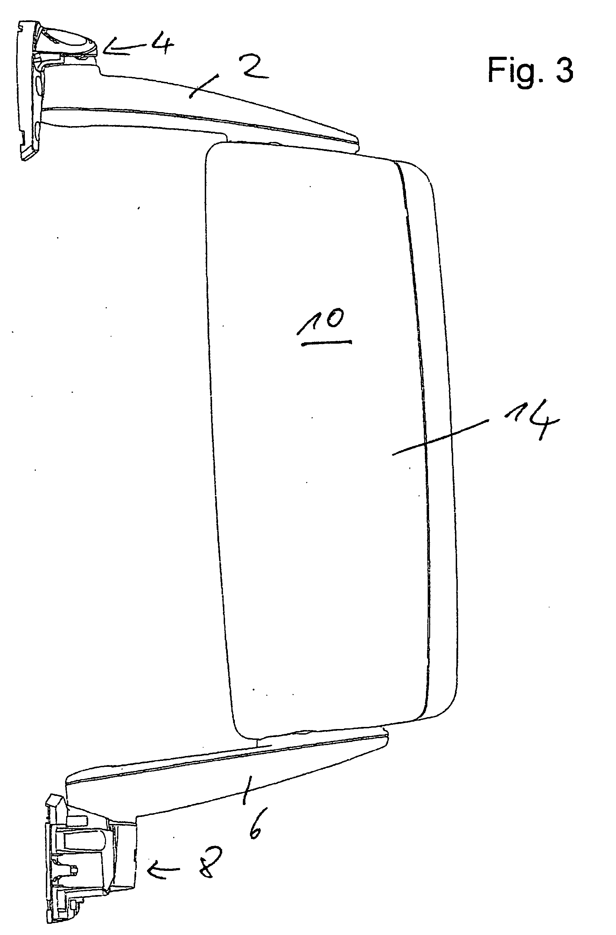

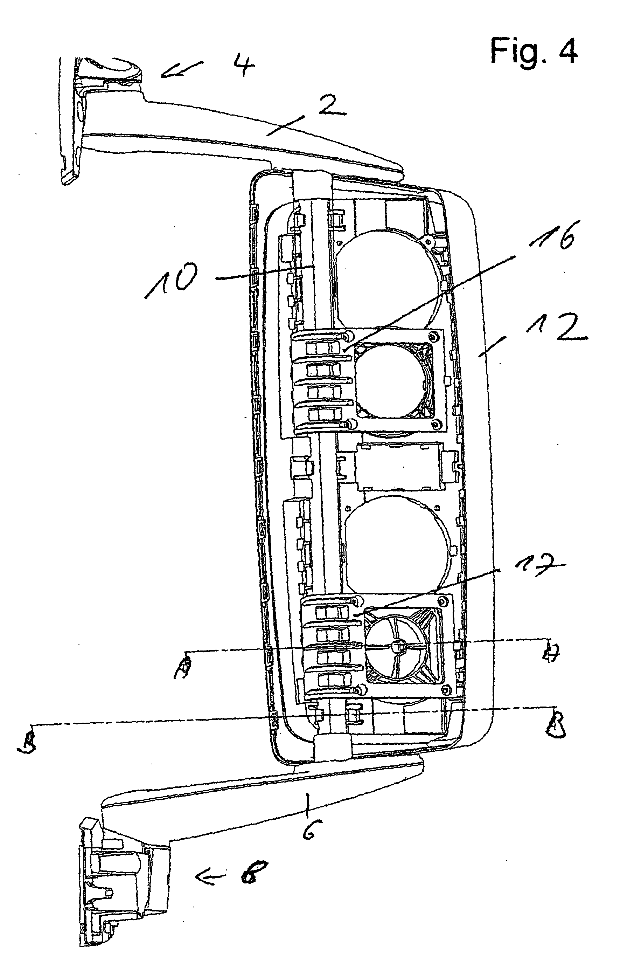

Fig. 3 und 4 zeigen entgegen der Fahrtrichtung einen linken Außenspiegel mit einer Spiegelhalterung nach Fig. 1 bzw. 2, d. h. an dem Spiegelkopfhaltearm 10 ist ein Spiegelkopf 12 montiert. In Fig. 3 ist der Spiegelkopf 12 mit einer Abdeckung 14 versehen, Fig. 4 zeigt den Spiegelkopf 12 ohne Abdeckung 14. Wie aus Fig. 4 zu ersehen ist, ist der Spiegelkopf 12 über eine obere und eine untere Klemmverbindung 16 bzw. 17 mit dem Aluminium-Strangpressprofil bzw. dem Spiegelkopfhaltearm 10 verbunden.,Hierfür eignet sich insbesondere eine Klemmverbindung, wie sie aus der EP 1 020 326 bekannt ist.

Wie aus den Figuren 1, 2, 5a und 5b zu ersehen ist, ist das Strangpressprofil 10 ein Hohlprofil und weist an der Außenseite eine erste und eine zweite Längsnut 18 und 19 auf, die in einen Winkelabstand von etwa 150° zueinander angeordnet sind, d.h. die beiden Längsnuten 18 und 19 liegen nicht symmetrisch zu einer Längsachse des Strangpressprofils 10.. Durch die beiden Längsnuten 18 und 17 wird die Winkelstellung des Spiegelkopfhaltearms 10 relativ zu dem oberen und dem unteren Haltearm 2, 6 festgelegt. Durch den Form- und Reibschluss zwischen Spiegelkopfhaltearm 10 und den beiden Haltearmen 2, 6 wird das notwendige Drehmoment von dem Spiegelkopfhaltearm 10 auf die beiden Haltearme 2, 6 übertragen.

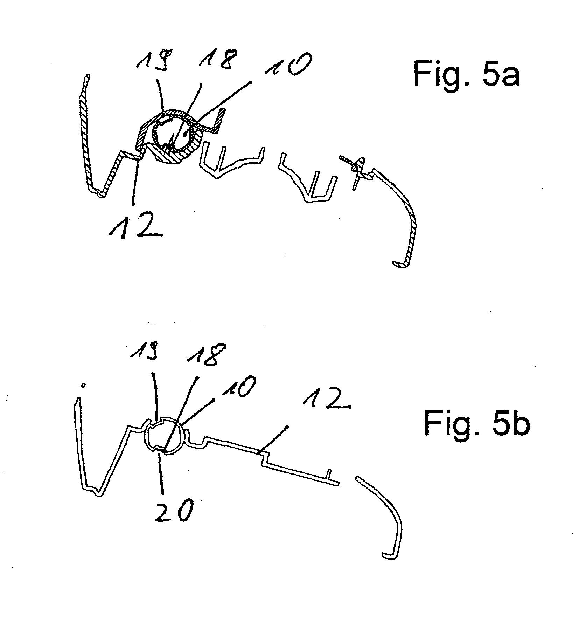

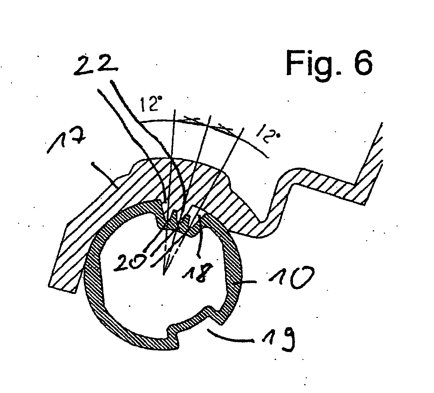

Zur genauen Festlegung der Winkelstellung des Spiegelkopfes 12 relativ zu dem Strangpressprofil 10 weist eine der beiden Längsnuten 18 und 19, hier die Längsnut 18, mehrere in Längsrichtung der Längsnut 18 verlaufende Rillen 20 auf - siehe Fig. 5a, 5b und 6. Die Teilung dieser Längsrillen 20 bestimmt den kleinstmöglich einstellbaren Versatz des Spiegelkopfes 12 an den Spiegelkopfhaltearm 10. In die Längsrillen 20 greifen komplementär geformte Vorsprünge 22 ein, die in der oberen und der unteren Klemmverbindung 16 und 17 vorgesehen sind. Durch diesen Formschluss wird die Winkellage des Spiegelkopfes 12 genau festgelegt. Wie aus Fig. 6 zu ersehen ist, beträgt in der beispielhaften Ausführungsform der Versatz zwischen zwei Längsrillen 20 12°. Natürlich sind auch andere Teilungen bei entsprechender Ausgestaltung der Längsrillen 20 und der komplementär geformten Vorsprünge 22 möglich.

### Bezugszeichenliste:

- 2: oberer Haltearm
- 4: oberes Befestigungselement
- 6: unterer Haltearm
- 8: unteres Befestigungselement
- 10: Spiegelkopfhaltearm
- 12: Spiegelkopf
- 14: Spiegelkopfabdeckung
- 16: obere Klemmverbindung
- 17: untere Klemmverbindung
- 18: erste Längsnut
- 19: zweite Längsnut
- 20: Längsrillen
- 22: komplementäre Vorsprünge

## Patentansprüche

1. Spiegelhalterung für Fahrzeugaußenspiegel mit:
einem oberen Haltearm (2), der ein oberes Befestigungselement (4) zur Befestigung an einem Fahrzeug aufweist,
einem unteren Haltearm (6), der ein unteres Befestigungselement (8) zur Befestigung an dem Fahrzeug aufweist, und
einem die oberen und den unteren Haltearme (2, 6) verbindenden Spiegelkopfhaltearm (10), der als ein Strangpressprofil ausgebildet ist,
**dadurch gekennzeichnet, dass**
das Strangpressprofil (10) wenigstens eine erste Längsnut (18, 19) aufweist, die eine bestimmte Winkelstellung des Spiegelkopfhaltearms (10) relativ zum oberen und/oder unteren Haltearm (2, 6) festlegt.

2. Spiegelhalterung nach Anspruch 1, **dadurch gekennzeichnet, dass** das Strangpressprofil (10) wenigstens eine zweite Längsnut (19) aufweist, die nicht symmetrisch zu der ersten Längsnut (18) angeordnet ist.

3. Spiegelhalterung nach Anspruch 1 oder 2, **dadurch gekennzeichnet, dass** in der wenigstens einen Längsnut (18, 19) eine Mehrzahl von Längsrillen (20) eingebracht sind.

4. Spiegelhalterung nach Anspruch 3, **dadurch gekennzeichnet, dass** die Mehrzahl von Längsrillen (20) unterschiedliche Winkelstellungen eines an dem Spiegelkopfhaltearm (10) befestigbaren Spiegelkopfes (12) relativ zur Spiegelhalterung festlegt.

5. Spiegelhalterung nach einem der vorhergehenden Ansprüche, **dadurch gekennzeichnet, dass** das Strangpressprofil (10) ein Hohlprofil ist.

6. Spiegelhalterung nach einem der vorhergehenden Ansprüche, **dadurch gekennzeichnet, dass** das Strangpressprofil (10) aus Metall, insbesondere aus Aluminium besteht.

7. Spiegelhalterung nach einem der vorhergehenden Ansprüche, **dadurch gekennzeichnet, dass** der obere Haltearm (2) einer linken Spiegelhalterung identisch mit dem unteren Haltearm (6) einer rechten Spiegelhalterung ist, und dass der untere Haltearm (6) einer linken Spiegelhalterung identisch mit dem oberen Haltearm (2) einer rechten Spiegelhalterung ist.

8. Spiegelhalterung nach einem der vorhergehenden Ansprüche, **dadurch gekennzeichnet, dass** das obere und das untere Befestigungselement (4, 8) jeweils ein Drehgelenk zur Veränderung der Winkelstellung der Spiegelhalterung relativ zum Fahrzeug umfasst.

9. Spiegelhalterung nach Anspruch 8, **dadurch gekennzeichnet, dass** das Drehgelenk ein Rastgelenk ist.

10. Spiegelhalterung nach einem der vorhergehenden Ansprüche, **dadurch gekennzeichnet, dass** der obere und der untere Haltearm (2, 6) aus Kunststoff bestehen.

11. Spiegelhalterung nach einem der vorhergehenden Ansprüche, **dadurch gekennzeichnet, dass** der Spiegelkopfhaltearm (10) durch Form- oder Reibschluss an dem oberen und/oder dem unteren Haltearm (2, 6) befestigt ist.

12. Linker oder rechter Fahrzeugaußenspiegel mit einer Spiegelhalterung nach einem der vorhergehenden Ansprüche an dem wenigstens ein Spiegelkopf (12) montiert ist.

## Claims

1. A mirror mount for vehicle external mirrors, comprising:
an upper support arm (2) including an upper fastening member (4) for fastening to a vehicle,
a lower support arm (6) including a lower fastening member (8) for fastening to the vehicle, and
a mirror head brace (10) connecting the upper and lower support arms (2, 6) and having the form of an extruded profile,
**characterized in that**
the extruded profile (10) includes at least one first longitudinal groove (18, 19) determining a particular angular position of the mirror head brace (10) relative to the upper and/or lower support arm(s) (2, 6).

2. The mirror mount of claim 1, **characterized in that** the extruded profile (10) includes at least one second longitudinal groove (19) having a non-symmetrical arrangement relative to the first longitudinal groove (18).

3. The mirror mount of claim 1 or 2, **characterized in that** a plurality of longitudinal flutings (20) are provided in the at least one longitudinal groove (18, 19).

4. The mirror mount of claim 3, **characterized in that** the plurality of longitudinal flutings (20) determine different angular positions, relative to the mirror mount, of a mirror head (12) adapted to be fastened to the mirror head brace (10).

5. The mirror mount of any one of the preceding claims, **characterized in that** the extruded profile (10) is a hollow profile.

6. The mirror mount of any one of the preceding claims, **characterized in that** the extruded profile (10) is made of metal, in particular of aluminum.

7. The mirror mount of any one of the preceding claims, **characterized in that** the upper support arm (2) of a left-side mirror mount is identical with the lower support arm (6) of a right-side mirror mount, and **in that** the lower support arm (6) of a left-side mirror mount is identical with the upper support arm (2) of a right-side mirror mount.

8. The mirror mount of any one of the preceding claims, **characterized in that** the upper and lower fastening members (4, 8) each include a pivotal joint for altering the angular position of the mirror mount relative to the vehicle.

9. The mirror mount of claim 8, **characterized in that** the pivotal joint is a locking joint.

10. The mirror mount of any one of the preceding claims, **characterized in that** the upper and the lower support arms (2, 6) are made of plastic.

11. The mirror mount of any one of the preceding claims, **characterized in that** the mirror head brace (10) is fastened to the upper and/or lower support arm(s) (2, 6) by interlocking or frictional engagement.

12. A left-side or right-side vehicle external mirror comprising a mirror mount of any one of the preceding claims on which at least one mirror head (12) is mounted.

## Revendications

1. Fixation de miroir pour un rétroviseur extérieur de véhicule, comprenant :
un bras de fixation supérieur (2), présentant un élément de fixation supérieur (4) pour fixation à un véhicule,
un bras de fixation inférieur (6), présentant un élément de fixation inférieur (8) pour fixation sur le véhicule,
un bras de fixation de tête de miroir (10), reliant les bras de fixation supérieur et inférieur (2, 6), réalisé sous forme de profilé d'extrusion,
**caractérisée en ce que**
le profilé d'extrusion (10) présente au moins une première rainure longitudinale (18, 19), déterminant une position angulaire déterminée du bras de fixation de tête de miroir (10) par rapport au bras de fixation supérieur et/ou inférieur (2, 6).

2. Fixation de miroir selon la revendication 1, **caractérisée en ce que** le profilé d'extrusion (10) présente au moins une deuxième rainure longitudinale (19), disposée de manière non symétrique par rapport à la première rainure longitudinale (18).

3. Fixation de miroir selon la revendication 1 ou 2, **caractérisée en ce qu'**une pluralité de cannelures longitudinales (20) sont ménagées dans la au moins une rainure longitudinale (18, 19).

4. Fixation de miroir selon la revendication 3, **caractérisée en ce que** la pluralité de cannelures longitudinales (20) détermine des positions angulaires différentes d'une tête de miroir (12), susceptible d'être fixée au bras de fixation de tête de miroir (10), par rapport à la fixation de miroir.

5. Fixation de miroir selon l'une des revendications précédentes, **caractérisée en ce que** le profilé d'extrusion (10) est un profilé creux.

6. Fixation de miroir selon l'une des revendications précédentes, **caractérisée en ce que** le profilé d'extrusion (10) est composé de métal, en particulier d'aluminium.

7. Fixation de miroir selon l'une des revendications précédentes, **caractérisée en ce que** le bras de fixation supérieur (2) d'une fixation de miroir gauche est identique au bras de fixation inférieur (6) d'une fixation de miroir droite, et **en ce que** le bras de fixation inférieur (6) d'une fixation de miroir gauche est identique au bras de fixation supérieur (2) d'une fixation de miroir droite.

8. Fixation de miroir selon l'une des revendications précédentes, **caractérisée en ce que** l'élément de fixation supérieur et l'élément de fixation supérieur inférieur (4, 8) comprennent chacun une articulation pivotante, pour modifier la position angulaire de la fixation de miroir par rapport au véhicule.

9. Fixation de miroir selon la revendication 8, **caractérisée en ce que** l'articulation pivotante est une articulation à encliquetage.

10. Fixation de miroir selon l'une des revendications précédentes, **caractérisée en ce que** le bras de fixation supérieur et le bras de fixation inférieur (2, 6) sont composés de matière synthétique.

11. Fixation de miroir selon l'une des revendications précédentes, **caractérisée en ce que** le bras de fixation de tête de miroir (10) est fixé sur le bras de fixation supérieur et/ou le bras de fixation inférieur (2, 6) par une liaison par ajustement de forme ou une liaison par friction.

12. Rétroviseur extérieur de véhicule gauche ou droit, avec une fixation de miroir selon l'une des revendications précédentes, sur lequel est montée au moins une tête de miroir (12).
